# EUROPÄISCHE PATENTSCHRIFT

(11) **EP 2 032 297 B1**
(45) Veröffentlichungstag und Bekanntmachung des Hinweises auf die Patenterteilung: **23.02.2011**
(21) Anmeldenummer: 07785808.2
(22) Anmeldetag: 06.06.2007
(51) Int. Cl.: B23B 51/04

(54) **BOHRWERKZEUG INSBESONDERE FÜR METALLISCHE WERKSTOFFE**
DRILLING TOOL, PARTICULARLY FOR METALLIC MATERIALS
OUTIL DE PERÇAGE EN PARTICULIER POUR MATÉRIAUX MÉTALLIQUES

(30) Priorität: 14.06.2006 DE 102006027552
(43) Veröffentlichungstag der Anmeldung: 11.03.2009
(73) Patentinhaber: AUDI AG, 85045 Ingolstadt (DE)
(72) Erfinder: KOPTON, Peter, 85092 Kösching (DE)
(74) Vertreter: Geissler, Manfred
(86) Internationale Anmeldenummer: PCT/EP2007/005011
(87) Internationale Veröffentlichungsnummer: WO 2007/144098

(56) Entgegenhaltungen:
- EP-A- 0 589 333
- EP-A1- 0 750 960
- EP-A2- 0 320 881
- WO-A-01/76794
- WO-A-97/03792
- DE-A1- 10 333 340

## Beschreibung

Die Erfindung betrifft ein Bohrwerkzeug insbesondere für metallische Werkstoffe nach dem Oberbegriff des Patentanspruches 1.

Solche Bohrwerkzeuge werden im Fahrzeugbau, z. B. bei der Herstellung von Zylinderkopf-Bohrungen, zum Bohren aus einem Vollmaterial oder zum Aufbohren bereits vorgefertigter Bohrlöcher verwendet.

So ist aus der EP 0 750 960 B1 ein gattungsgemäßes Bohrwerkzeug bekannt, das einen üblichen Spannschaft und einen daran anschließenden zylindrischen Bohrkörper aufweist. Zwischen der Bohrkörper-Stirnseite und dem Spannschaft erstrecken sich zwei nutenförmige Spanräume. Diese werden jeweils von Seitenwänden begrenzt, von denen jeweils eine Seitenwand an der Bohrkörperstirnseite ein Schneidelement trägt. In den beiden Spanräumen werden während des Bohrvorgangs Späne aus dem Bohrloch nach außen abgeführt.

Die das Schneidelement tragende Seitenwand des jeweiligen Spanraums ist hierbei eben ausgebildet und schließt bündig mit der Oberseite des Schneidelements ab. Die beiden Spanräume erstrecken sich teilweise gewendelt in der Bohrkörperlängsachse.

Durch diesen teilweise gewendelten Verlauf der Spanräume sowie die radial offene Gestaltung der Spanräume ist die Spanabfuhr aus dem Bohrloch beeinträchtigt. So können die Späne aufgrund der Zentrifugalkraft an die Bohrungswand gedrängt werden. Dies hat insbesondere bei einer vorgefertigten Zylinderkopf-Bohrung, in deren Wand Hohlräume, etwa Taschen oder Querbohrungen, vorhanden sind, den Nachteil, dass sich Späne in den Hohlräumen klemmen. Die Hohlräume müssen daher nach dem Bohrvorgang zeitaufwendig manuell von den Spänen befreit werden, um deren Funktionsfähigkeit zu gewährleisten.

Aus der EP 0 320 881 A2 ist ein Spiralbohrer mit einem zylindrischen Körper bekannt, der eine in seiner äußeren Umfangsfläche ausgebildete Spiralspannut aufweist. Diese verläuft spiralförmig bis zum vorderen Ende des Spiralbohrers. Aus der EP 0 589 333 A ist ebenfalls ein Bohrwerkzeug bekannt, der einen Bohrkörper mit zwei gegenüberliegenden nutenförmigen Spanräumen aufweist, die sich bis zur Stirnseite des Bohrkörpers erstrecken.

Die Aufgabe der Erfindung besteht darin, ein Bohrwerkzeug insbesondere für metallische Werkstoffe bereitzustellen, bei dem während des Bohrvorgangs anfallende Späne zuverlässig aus der Bohrung abgeführt werden.

Die Aufgabe der Erfindung ist durch die Merkmale des Patentanspruches 1 gelöst. Vorteilhafte Weiterbildungen der Erfindung sind in den Unteransprüchen offenbart.

Gemäß dem kennzeichnenden Teil des Patentanspruches 1 weist die, das Schneidelement tragende Seitenwand einen, von der Seitenwand in der Umfangsrichtung hochgezogenen Steg auf, der sich in der Bohrerlängsrichtung erstreckt. Durch den in der Umfangsrichtung hochgezogenen Steg ist der Spanraum außenseitig zumindest teilweise geschlossen. Die während des Bohrvorgangs durch den Spanraum transportierten Späne werden somit aufgrund der Zentrifugalkraft nicht gegen die Bohrungswand, sondern gegen den Steg gedrängt, so dass die Späne berührungsfrei gegenüber der Bohrungswand abgeführt werden.

Der erfindungsgemäße Steg kann somit den Spanraum in der Radialrichtung nach außen begrenzen. Besonders bevorzugt ist es, wenn der Steg am auβenumfangsseitigen Rand der Seitenwand gebildet ist. Die somit zwischen dem

Steg und einer gegenüberliegenden Seitenwand des Spanraums gebildete Nut ist damit ausreichend breit dimensioniert, d. h. größer als die Spanbreite von geteilten und/oder ungeteilten Spänen.

Erfindungsgemäß werden somit die entstehenden Späne aufgrund der wirkenden Fliehkräfte in die Nut gedrückt, die sich bevorzugt geradlinig, ohne eine Wendelung, in der Bohrkörperlängsrichtung erstrecken kann. Ein solcher geradliniger Nutverlauf begünstigt eine schnelle Spanabfuhr.

Zur Ausbildung der oben genannten Nut kann der Steg in einer Ausführungsform mit seiner Oberkante im wesentlichen bündig mit der Oberseite des Schneidelements abschließen. Auf diese Weise ist die durch den Steg begrenzte Nut mit ihrem Nutboden gegenüber dem Schneidelement in der Drehrichtung des Bohrwerkzeugs nach hinten verlagert. Die Späne können so auf grund der wirkenden Zentrifugalkraft zuverlässig in die Nut gedrückt werden.

Gemäß einer weiteren Ausführungsform kann alternativ der Steg die Oberseite des Schneidelements überragen, wodurch entsprechend die Nuthöhe in einfacher Weise gesteigert werden kann. Dabei kann der Nutboden der zwischen dem Steg und der gegenüberliegenden Seitenwand des Spanraums gebildeten Nut im wesentlichen bündig mit der Oberseite des Schneidelements abschlieβen. Um den Spänetransport von dem stirnseitigen Schneidelement aus dem Spanraum heraus zu unterstützen, kann sich die Nuttiefe der zwischen dem Steg und der gegenüberliegenden Seitenwand des Spanraums gebildeten Nut in der Richtung des Spannschafts erhöhen.

Wie bereits erwähnt, ist es besonders bevorzugt, wenn die von dem Steg begrenzte Nut zwischen der Bohrkörper-Stirnseite und dem Spannschaft geradlinig verläuft. Auf diese Weise wird ein rinnenförmig ausgestalteter geradlinig verlaufender Spanraum ohne jegliche Wendelung bereitgestellt, der einen schnellen Abtransport der Späne ermöglicht. Ein Radialwinkel der Seitenwände des Spanraums kann dabei bei null liegen.

Die Förderung der Späne durch den Spanraum wird weiter begünstigt, wenn die Seitenwände des Spanraums eben ausgebildet sind und/oder zueinander im wesentlichen rechtwinklig angeordnet sind. Vorzugsweise kann die zwischen dem Steg und der gegenüberliegenden Seitenwand des Bohrkörpers gebildete Nut schaftseitig mit einem Auslass seitlich geöffnet sein, um eine Förderung der Späne aus dem Spanraum heraus zu ermöglichen.

Die Spanabfuhr kann durch den Einsatz eines Kühlmittels unterstützt werden, das mit hohem Druck im Bereich der Stirnseite des Bohrwerkzeugs aus einem Kühlmittelaustritt in den Spanraum geführt ist und die Späne aus der Bohrung herausspült.

Erfindungsgemäß kann das Kühlmittel über einen ersten Kühlmittelaustritt und einem zweiten Kühlmittelaustritt mit hohem Druck in den Spanraum geführt werden. Die beiden Kühlmittelaustritte können dabei so zueinander positioniert werden, dass die entstehenden Späne beabstandet von der Bohrungswand im Bereich eines Scheitels zwischen den Spanraumwänden gebündelt werden.

Die Bündelung der entstehenden Späne mit Hilfe der austretenden Kühlmittelströme kann unterstützt werden, wenn die beiden Kühlmittelkanäle in unterschiedliche Seitenwände des Spanraums münden.

Zur Versorgung des Bohrwerkzeugs mit Kühlmittel kann das Bohrwerkzeug zumindest eine zentrale Kühlmittelleitung aufweist, von der ein erster und zweiter Kühlmittelkanal abzweigen. Alternativ kann die zentrale Kühlmittelleitung über eine Querbohrung mit dem ersten und zweiten Kühlmittelkanal strömungstechnisch in Verbindung sein. Dabei kann der erste Kühlmittelkanal als ein Hauptkanal mit größerem Strömungsquerschnitt in die, dem Steg gegenüberliegende Seitenwand des Spanraums münden. Der zweite Kühlmittelkanal kann als ein Nebenkanal mit geringerem Strömungsquerschnitt in die, das Schneidelement tragende Seitenwand münden. Durch die Anordnung des zweiten Kühlmittelkanals unterhalb des Schneidelements kann die Spanabfuhr sowie die Bündelung der Späne im Scheitelbereich weiter unterstützt werden.

Die Strömungsgeschwindigkeit des aus den Kanälen austretenden Kühlmittels in der Bohrkörperlängsrichtung hängt vom Volumenstrom und vom Austrittsdurchmesser der Kühlmittelkanäle ab. Eine zusätzliche Kühlmittelgeschwindigkeitskomponente wird bei rotierendem Bohrwerkzeug durch die Zentrifugalkraft erzeugt. Die hohe Strömungsgeschwindigkeit des Kühlmittels führt zu einem geringen statischen Druck des Kühlmittels, was im Spanraum eine Saugwirkung erzeugt. Ein aufgrund der hohen Strömungsgeschwindigkeit entstehender großer dynamischer Druck bewirkt, dass das Kühlmittel die Späne aus dem Spanraum wirkungsvoll abführen kann.

Nachfolgend sind drei Ausführungsbeispiele der Erfindung anhand der beigefügten Figuren beschrieben.

Es zeigen:
- Fig. 1: in einer Seitenansicht ein Bohrwerkzeug gemäß dem ersten Aus- führungsbeispiel;
- Fig. 2: in einer Vorderansicht die Stirnseite des Bohrwerkzeugs;
- Fig. 3: die Einzelheit X aus der Fig. 1 in Vergrößerung;
- Fig. 4: eine Ansicht entsprechend der Fig. 2 gemäß dem zweiten Ausfüh- rungsbeispiel;
- Fig. 5: eine Ansicht entsprechend der Fig. 3;
- Fig. 6: eine Ansicht entsprechend der Fig. 2 gemäß dem dritten Ausfüh- rungsbeispiel; und
- Fig. 7: die Stirnseite des Bohrwerkzeugs gemäß dem dritten Ausfüh- rungsbeispiel.

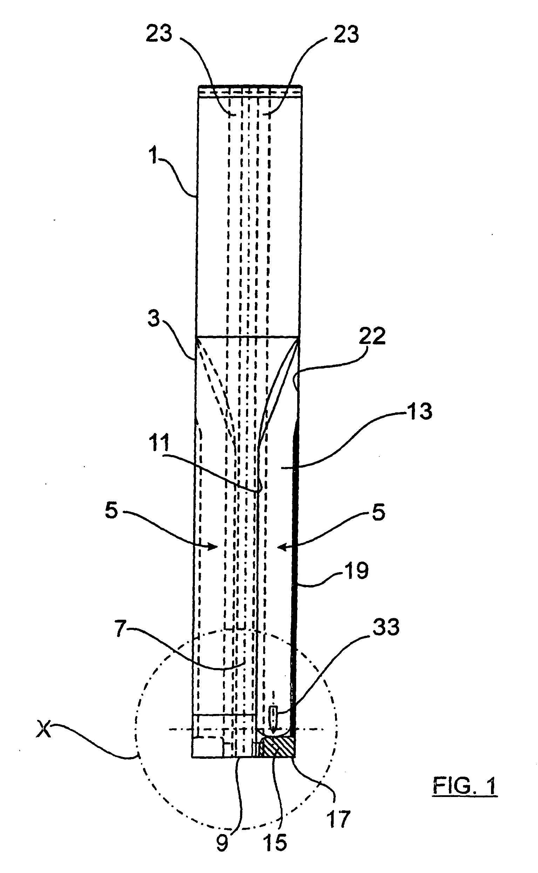

In der Fig. 1 ist ein Bohrwerkzeug zum Bohren in metallischen Werkstücken gemäß dem ersten Ausführungsbeispiel gezeigt. Das Bohrwerkzeug weist einen zylindrischen Spannschaft 1 auf, an dem sich in üblicher Weise ein Bohrkörper 3 anschließt. Der Bohrkörper 3 weist zwei im wesentlichen nutenförmige Spanräume 5 auf, die sich zu beiden Seiten einer Bohrkörperlängsachse 7 erstrecken und in eine Stirnfläche 9 des Bohrerkörpers 3 münden. Jeder der Spanräume 5 ist durch zwei Seitenwände 11 und 13 begrenzt.

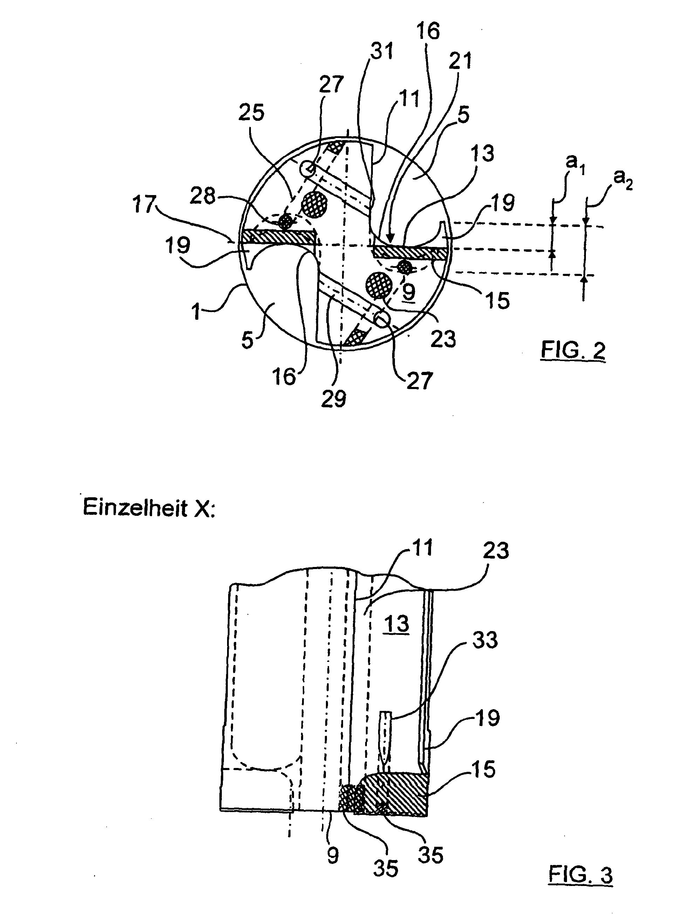

Von den beiden Seitenwänden 11, 13 der Spanräume 5 weist die Seitenwand 13 an ihrem stirnseitigen Ende eine taschenförmige Ausnehmung auf, in der ein plattenförmiges Schneidelement 15 sitzt, deren Oberseite mit der Seitenwand 13 bündig abschließt. Das Schneidelement 15 überragt mit seiner frontseitigen Schneidkante 17 geringfügig die Stirnfläche 9 des Bohrkörpers 3 und steht radial geringfügig über den Bohrkörperumfang vor, wie es in der Fig. 3 angedeutet ist.

In der Fig. 2 ist die Stirnfläche 9 des Bohrkörpers 3 in der Vorderansicht mit den beiden gegenüberliegenden Spanräumen 5 gezeigt. Demzufolge sind die beiden Schneidelemente 15 in gleichen radialen Abständen zur Bohrkörperlängsachse 7 angeordnet. Die beiden Seitenwände 11, 13 laufen an einem abgerundeten Scheitel 16 zusammen und sind im wesentlichen rechtwinklig zueinander angeordnet.

Wie aus der Fig. 2 weiter hervorgeht, liegt der Radialwinkel zwischen einer Querachse 17 und den Schneidelementen 15 bei null. D. h., dass die Schneidelemente 15 in Umfangsrichtung nicht gekippt angeordnet sind, sondern in Richtung des Bohrkörper-Radius ausgerichtet sind.

An der, das Schneidelement 15 tragenden Seitenwand 13 des jeweiligen Spanraums 5 ist am außenumfangsseitigen Rand jeweils ein Steg 19 angeformt. Der Steg 19 ist in der Umfangsrichtung des Bohrwerkzeugs hochgezogen und erstreckt sich in der Bohrerlängsrichtung bis zum Spannschaft 1. Der Steg 19 schließt dabei gemäß der Fig. 3 in Axialrichtung unmittelbar hinter dem Schneidelement 15 an und begrenzt zwischen sich und der gegenüberliegenden Seitenwand 11 des Spanraums 5 eine im Querschnitt U-förmige, geradlinig verlaufende Nut 21.

Wie aus der Fig. 2 hervorgeht, überragt der Steg 19 das jeweilige Schneidelement 15 in der Umfangsrichtung, so dass die Nut 21 mit ihrem Nutboden bündig mit der Oberseite des Schneidelements 15 abschließt. Der Nutboden ist dabei durch die, das Schneidelement 15 tragenden Seitenwand 13 gebildet.

Wie aus der Fig. 2 hervorgeht, weist die Nut 21 an ihrem stirnseitigen Ende eine Nuttiefe a₁ auf, die sich in Richtung des Spannschafts 1 bis zu einer Nuttiefe a₂ erhöht, um eine Spanabfuhr zu unterstützen. Entsprechend verläuft die Seitenwand 13 in der Richtung der Bohrkörperlängsachse 7 zum Spannschaft 1 geneigt. Im Bereich des Spannschafts 1 ist der die Nut 21 seitlich begrenzende Steg 19 unterbrochen, so dass die Nut 21 gemäß der Fig. 1 mit einem Auslaß 22 seitlich geöffnet ist, damit die entstehenden Späne den jeweiligen Spanraum 5 verlassen können.

Um das Bohrwerkzeug mit einem Kühlmittel zu versorgen, erstrecken sich in der Fig. 1 zwei Kühlmittelleitungen 23 zentral durch das Bohrwerkzeug, von denen jede einem Spanraum 5 zugeordnet ist. Jede der zentralen Kühlmittelleitungen 23 ist gemäß der Fig. 2 strömungstechnisch mit einer Querbohrung 25 in Verbindung, die das Kühlmittel in zwei separate Kühlmittelkanäle 27 und 28 aufteilt. Die beiden Kühlmittelkanäle 27, 28 sind jeweils in die Bohrkörper-Stirnfläche 9 eingearbeitete Bohrungen. Der Kühlmittelkanal 27 mündet daher in die Stirnfläche 9 des Bohrkörpers 3 und wird in der Stirnfläche 9 als ein Stichkanal 29 zur Seitenwand 11 geführt, wo er in einem ersten Kühlmittelaustritt 31 in den Spanraum 5 mündet. Der zweite Kühlmittelkanal 28 erstreckt sich unterhalb des jeweiligen Schneidelements 15 in der Richtung der Bohrkörperlängsachse 7 und mündet mit einem zweiten Kühlmittelaustritt 33 in die schräg verlaufende Seitenwand 13.

In den Fig. 1 bis 3 sind jeweils die Zentralleitungen 23 sowie die zweiten Kühlmittelkanäle 28 stirnseitig durch jeweils einen Gewindestopfen 35 geschlossen gezeigt.

Bei einem Bohrvorgang werden die entstehenden Späne aufgrund der Zentrifugalkraft in die Nut 21 des rotierenden Bohrwerkzeugs gedrückt und daher mittels des Stegs 19 berührungsfrei gegenüber der Bohrungswand gehalten. Aufgrund der von a₁ zu a₂ steigenden Nuttiefe wird der Spantransport in Richtung des Nutauslaufes 22 unterstützt. Eine zusätzliche Unterstützung der Spanabfuhr erfolgt durch das Kühlmittel, das durch den ersten Kühlmittelaustritt 31 gemäß der Fig. 2 und den zweiten Kühlmittelaustritt 33 gemäß der Fig. 3 mit hohem Druck in den jeweiligen Spanraum 5 eingeleitet wird und die Späne im Bereich des Scheitels 16 zwischen den beiden Seitenwänden 11, 13 zusätzlich bündelt.

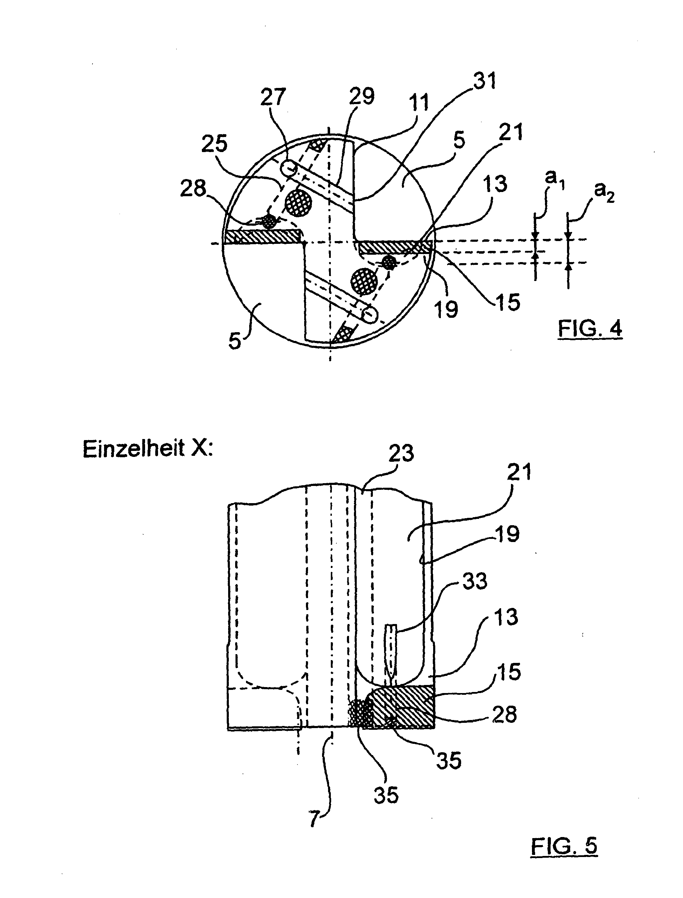

In den Fig. 4 und 5 ist ein Bohrwerkzeug gemäß dem zweiten Ausführungsbeispiel dargestellt. Im Unterschied zum ersten Ausführungsbeispiel der Fig. 1 bis 3 ist in dem zweiten Ausführungsbeispiel die Nut 21 als eine Vertiefung in der Seitenwand 13 eingearbeitet. Die Nut 21 ist somit in einer Werkzeugdrehrichtung gegenüber dem Schneidelement 15 in der Umfangsrichtung zurückgesetzt. Der am Außenumfangsrand gebildete Steg 19 schließt somit mit seiner Oberkante im wesentlichen bündig mit der Oberseite des jeweiligen Schneidelements 15 ab. Die Nut 21 ist dabei mit einer Nuttiefe a₁ in der Axialrichtung unmittelbar hinter dem Schneidelement 15 angeordnet. Diese steigert sich bis zu einer Nuttiefe a₂ im Bereich des Spannschafts 1.

Die Versorgung der Spanräume 5 mit Kühlmittel erfolgt in gleicher Weise wie im ersten Ausführungsbeispiel mittels der zentralen Kühlmittelleitungen 23 sowie den ersten und zweiten Kühlmittelkanälen 27 und 28.

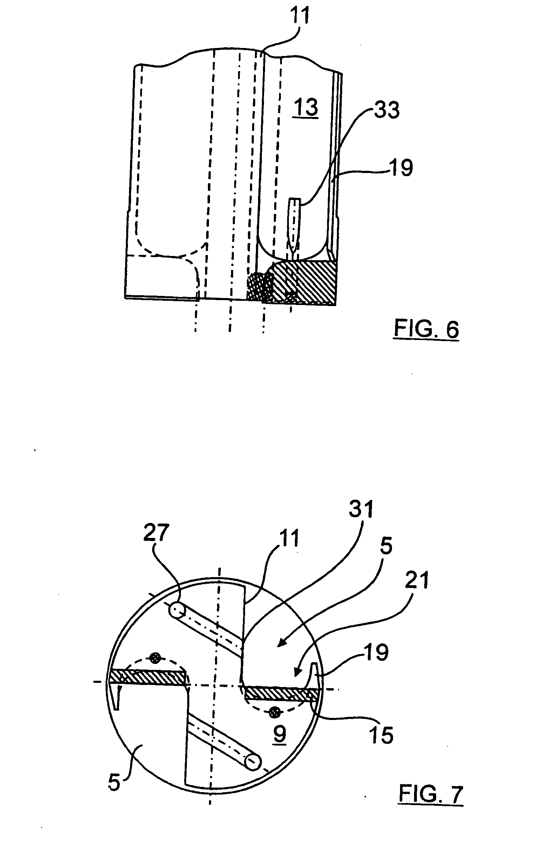

In dem dritten Ausführungsbeispiel der Fig. 6 und 7 ist einerseits die Nut 21 als eine Vertiefung in die Seitenwand 13 eingearbeitet und somit der Nutboden gegenüber dem Schneidelement 15 zurückgesetzt, wie es im zweiten Ausführungsbeispiel der Fig. 4 und 5 der Fall ist. Darüber hinaus ist der die Nut 21 begrenzende Steg 19 über das Schneidelement 15 hinaus in der Umfangsrichtung hochgezogen, wie es im ersten Ausführungsbeispiel der Fall ist.

Dadurch ergibt sich eine im Vergleich zum ersten und zweiten Ausführungsbeispiel erhöhte Nuttiefe, wodurch die entstehenden Späne noch sicherer in der Nut 21, und daher berührungsfrei gegenüber der Bohrungswand aus dem Bohrloch abgeführt werden können.

## Patentansprüche

1. Bohrwerkzeug, insbesondere für metallische Werkstoffe, mit einem Spannschaft (1) und einem im wesentlichen zylindrischen Bohrkörper (3), zwischen dessen Stirnseite (9) und dem Spannschaft (1) sich zumindest ein nutenförmiger Spanraum erstreckt, der von Seitenwänden (11, 13) begrenzt ist, von denen eine Seitenwand (13) an der Bohrkörperstirnseite (9) ein Schneidelement (15) trägt, **dadurch gekennzeichnet, dass** die das Schneidelement (15) tragende Seitenwand (13) seinen, von der Seitenwand (13) in der Umfangsrichtung hochgezogenen Steg (19) aufweist, der sich in der Bohrerlängsrichtung erstreckt.

2. Bohrwerkzeug nach Anspruch 1, **dadurch gekennzeichnet, dass** der Steg (19) den Spanraum (5) in Radialrichtung nach außen begrenzt.

3. Bohrwerkzeug nach Anspruch 1 oder 2, **dadurch gekennzeichnet, dass** der Steg (19) am außenumfangsseitigen Rand der Seitenwand (13) gebildet ist.

4. Bohrwerkzeug nach Anspruch 1, 2 oder 3, **dadurch gekennzeichnet, dass** der Steg (19) zusammen mit einer gegenüberliegenden Seitenwand (11) des Spannraums (5) eine Nut (21) ausbildet, die sich in der Bohrkörperlängsrichtung erstreckt.

5. Bohrwerkzeug nach einem der vorhergehenden Ansprüche, **dadurch gekennzeichnet, dass** die Nut (21) und/oder der Steg (19) der das Schneidelement (15) tragenden Seitenwand (13) in Axialrichtung hinter dem Schneidelement (15) angeordnet ist.

6. Bohrwerkzeug nach einem der vorhergehenden Ansprüche, **dadurch gekennzeichnet, dass** der Steg (19) mit seiner Oberkante im wesentlichen bündig mit einer Oberseite des Schneidelements (15) abschließt.

7. Bohrwerkzeug nach einem der Ansprüche 1 bis 5, **dadurch gekennzeichnet, dass** der Steg (19) mit seiner Oberkante die Oberseite des Schneidelements (15) überragt.

8. Bohrwerkzeug nach Anspruch 7, **dadurch gekennzeichnet, dass** der Nutboden der zwischen den Steg (19) und der gegenüberliegenden Seitenwand (11) des Spanraums (5) gebildeten Nut (21) im wesentlichen bündig mit der Oberseite des Schneidelements (15) abschließt.

9. Bohrwerkzeug nach einem der Ansprüche 4 bis 7, **dadurch gekennzeichnet, dass** der Nutboden gegenüber dem Schneidelement (15) in der Drehrichtung des Bohrwerkzeugs zurückgesetzt ist.

10. Bohrwerkzeug nach einem der Ansprüche 4 bis 9, **dadurch gekennzeichnet, dass** die Nuttiefe (a₁, a₂) der zwischen dem Steg (19) und der gegenüberliegenden Seitenwand (11) des Spanraums (5) gebildeten Nut (21) sich in Richtung des Spannschafts (1) ändert.

11. Bohrwerkzeug nach einem der vorhergehenden Ansprüche, **dadurch gekennzeichnet, dass** ein Radialwinkel der Seitenwände (11, 13) des Spanraums (5) bei null liegt.

12. Bohrwerkzeug nach einem der vorhergehenden Ansprüche, **dadurch gekennzeichnet, dass** die Seitenwände (11, 13) des Spanraums (5) eben und/oder zu einander im wesentlichen rechtwinklig ausgebildet sind.

13. Bohrwerkzeug nach einem der vorhergehenden Ansprüche 4 bis 12, **dadurch gekennzeichnet, dass** die zwischen dem Steg (19) und der gegenüberliegenden Spanraumseitenwand (11) gebildete Nut (21) zwischen der Bohrkörper-Stirnseite (9) und dem Spannschaft (1) in der Axialrichtung geradlinig verläuft.

14. Bohrwerkzeug nach einem der vorhergehenden Ansprüche, **dadurch gekennzeichnet, dass** der Steg (19) schaftseitig mit einem Auslass (22) unterbrochen ist, um eine Förderung der Späne aus dem Spanraum (5) zu ermöglichen.

15. Bohrwerkzeug nach einem der vorhergehenden Ansprüche, mit zumindest einem ersten Kühlmittelkanal (27), der mit einem ersten Kühlmittelaustritt (31) in den Spanraum (5) des Bohrwerkzeugs mündet, **dadurch gekennzeichnet, dass** dem Spanraum (5) zumindest ein zweiter Kühlmittelkanal (28) zugeordnet ist, der mit einem zweiten Kühlmittelaustritt (33) in den Spanraum (5) mündet.

16. Bohrwerkzeug nach Anspruch 15, **dadurch gekennzeichnet, dass** der erste und der zweite Kühlmittelkanal (27, 28) von einer zentralen Kühlmittelleitung (23) im Bohrwerkzeug abzweigen.

17. Bohrwerkzeug nach Anspruch 15 oder 16, **dadurch gekennzeichnet, dass** der erste Kühlmittelkanal (27) und der zweite Kühlmittelkanal (28) in unterschiedliche Seitenwände (11, 13) des Spanraums münden.

18. Bohrwerkzeug nach einem der Ansprüche 15 bis 17, **dadurch gekennzeichnet, dass** der erste Kühlmittelkanal (27) als ein Hauptkanal in die dem Steg (19) gegenüberliegenden Seitenwand (11) mündet.

19. Bohrwerkzeug nach Anspruch 18, **dadurch gekennzeichnet, dass** der zweite Kühlmittelkanal (28) als ein Nebenkanal in die das Schneidelement (15) tragende Seitenwand (13) mündet.

20. Bohrwerkzeug nach Anspruch 19, **dadurch gekennzeichnet, dass** der zweite Kühlmittelkanal (28) unterhalb des Schneidelements (15) verläuft.

## Claims

1. Drilling tool, particularly for metallic materials, comprising a clamping shank (1) and a substantially cylindrical drill body (3), between the end face (9) of which and the clamping shank (1) at least one groove-shaped chip space extends, which is defined by side walls (11, 13), of which one side wall (13) carries a cutting element (15) at the drill body end face (9), **characterized in that** the side wall (13) carrying the cutting element (15) has a web (19) which is raised from the side wall (13) in the circumferential direction and extends in the drill longitudinal direction.

2. Drilling tool according to Claim 1, **characterized in that** the web (19) defines the chip space (5) radially on the outside.

3. Drilling tool according to Claim 1 or 2, **characterized in that** the web (19) is formed on the outer circumferential margin of the side wall (13).

4. Drilling tool according to Claim 1, 2 or 3, **characterized in that** the web (19) together with an opposite side wall (11) of the chip space (5) forms a groove (21) which extends in the drill body longitudinal direction.

5. Drilling tool according to one of the preceding claims, **characterized in that** the groove (21) and/or the web (19) of the side wall (13) carrying the cutting element (15) are/is arranged axially behind the cutting element (15).

6. Drilling tool according to one of the preceding claims, **characterized in that** the web (19), with its top edge, terminates substantially flush with a top side of the cutting element (15).

7. Drilling tool according to one of Claims 1 to 5, **characterized in that** the web (19), with its top edge, projects above the top side of the cutting element (15).

8. Drilling tool according to Claim 7, **characterized in that** the groove root of the groove (21) formed between the web (19) and the opposite side wall (11) of the chip space (5) terminates substantially flush with the top side of the cutting element (15).

9. Drilling tool according to one of Claims 4 to 7, **characterized in that** the groove root is set back relative to the cutting element (15) in the direction of rotation of the drilling tool.

10. Drilling tool according to one of Claims 4 to 9, **characterized in that** the groove depth (a₁, a₂) of the groove (21) formed between the web (19) and the opposite side wall (11) of the chip space (5) changes in the direction of the clamping shank (1).

11. Drilling tool according to one of the preceding claims, **characterized in that** a radial angle of the side walls (11, 13) of the chip space (5) is zero.

12. Drilling tool according to one of the preceding claims, **characterized in that** the side walls (11, 13) of the chip space (5) are designed to be flat and/or substantially at right angles to one another.

13. Drilling tool according to one of the preceding Claims 4 to 12, **characterized in that** the groove (21) formed between the web (19) and the opposite chip space side wall (11) runs rectilinearly in the axial direction between the drill body end face (9) and the clamping shank (1).

14. Drilling tool according to one of the preceding claims, **characterized in that** the web (19) is interrupted with an outlet (22) on the shank side in order to enable the chips to be delivered from the chip space (5).

15. Drilling tool according to one of the preceding claims, comprising at least one first coolant passage (27) which opens with a first coolant outlet (31) into the chip space (5) of the drilling tool, **characterized in that** at least one second coolant passage (28) is assigned to the chip space (5), said second coolant passage (28) opening with a second coolant outlet (33) into the chip space (5).

16. Drilling tool according to Claim 15, **characterized in that** the first and the second coolant passages (27, 28) branch off from a central coolant line (23) in the drilling tool.

17. Drilling tool according to Claim 15 or 16, **characterized in that** the first coolant passage (27) and the second coolant passage (28) open into different side walls (11, 13) of the chip space.

18. Drilling tool according to one of Claims 15 to 17, **characterized in that** the first coolant passage (27) opens as a main passage into the side wall (11) opposite the web (19).

19. Drilling tool according to Claim 18, **characterized in that** the second coolant passage (28) opens as a secondary passage into the side wall (13) carrying the cutting element (15).

20. Drilling tool according to Claim 19, **characterized in that** the second coolant passage (28) runs below the cutting element (15).

## Revendications

1. Outil de perçage, en particulier pour matériaux métalliques, comprenant une tige de serrage (1) et un corps de perçage (3) essentiellement cylindrique, entre le côté frontal (9) duquel et la tige de serrage (1) s'étend au moins un espace copeaux en forme de rainure, qui est limité par des parois latérales (11, 13), dont une paroi latérale (13) porte sur le côté frontal (9) du corps de perçage un élément de coupe (15), **caractérisé en ce que** la paroi latérale (13) portant l'élément de coupe (15) présente une nervure (19) relevée dans la direction périphérique depuis la paroi latérale (13), qui s'étend dans la direction longitudinale de la perceuse.

2. Outil de perçage selon la revendication 1, **caractérisé en ce que** la nervure (19) limite vers l'extérieur l'espace de copeaux (5) dans la direction radiale.

3. Outil de perçage selon la revendication 1 ou 2, **caractérisé en ce que** la nervure (19) est formée sur le bord de la paroi latérale (13) du côté périphérique extérieur.

4. Outil de perçage selon la revendication 1, 2 ou 3, **caractérisé en ce que** la nervure (19) constitue, conjointement avec une paroi latérale opposée (11) de l'espace de copeaux (5), une rainure (21) qui s'étend dans la direction longitudinale du corps de perçage.

5. Outil de perçage selon l'une quelconque des revendications précédentes, **caractérisé en ce que** la rainure (21) et/ou la nervure (19) de la paroi latérale (13) portant l'élément de coupe (15) sont disposées dans la direction axiale derrière l'élément de coupe (15).

6. Outil de perçage selon l'une quelconque des revendications précédentes, **caractérisé en ce que** la nervure (19) se termine avec son arête supérieure essentiellement en affleurement avec un côté supérieur de l'élément de coupe (15).

7. Outil de perçage selon l'une quelconque des revendications 1 à 5, **caractérisé en ce que** la nervure (19) dépasse avec son arête supérieure le côté supérieur de l'élément de coupe (15).

8. Outil de perçage selon la revendication 7, **caractérisé en ce que** le fond de rainure de la rainure (21) formée entre la nervure (19) et la paroi latérale opposée (11) de l'espace de copeaux (5) se termine essentiellement en affleurement avec le côté supérieur de l'élément de coupe (15).

9. Outil de perçage selon l'une quelconque des revendications 4 à 7, **caractérisé en ce que** le fond de rainure est en retrait par rapport à l'élément de coupe (15) dans le sens de rotation de l'outil de perçage.

10. Outil de perçage selon l'une quelconque des revendications 4 à 9, **caractérisé en ce que** la profondeur de rainure (a₁, a₂) de la rainure (21) formée entre la nervure (19) et la paroi latérale opposée (11) de l'espace de copeaux (5) varie dans la direction de la tige de serrage (1).

11. Outil de perçage selon l'une quelconque des revendications précédentes, **caractérisé en ce qu'**un angle radial des parois latérales (11, 13) de l'espace de copeaux (5) est nul.

12. Outil de perçage selon l'une quelconque des revendications précédentes, **caractérisé en ce que** les parois latérales (11, 13) de l'espace de copeaux (5) sont réalisées à plat et/ou essentiellement à angle droit l'une par rapport à l'autre.

13. Outil de perçage selon l'une quelconque des revendications 4 à 12, **caractérisé en ce que** la rainure (21) formée entre la nervure (19) et la paroi latérale opposée (11) de l'espace de copeaux s'étend entre le côté frontal (9) du corps de perçage et la tige de serrage (1) en ligne droite dans la direction axiale.

14. Outil de perçage selon l'une quelconque des revendications précédentes, **caractérisé en ce que** la nervure (19) est interrompue du côté de la tige par une sortie (22) afin de permettre un transport des copeaux hors de l'espace de copeaux (5).

15. Outil de perçage selon l'une quelconque des revendications précédentes, comprenant au moins un premier canal pour réfrigérant (27), qui débouche avec une première sortie de réfrigérant (31) dans l'espace de copeaux (5) de l'outil de perçage, **caractérisé en ce que** l'espace de copeaux (5) est associé à au moins un deuxième canal de réfrigérant (28) qui débouche avec une deuxième sortie de réfrigérant (33) dans l'espace de copeaux (5).

16. Outil de perçage selon la revendication 15, **caractérisé en ce que** le premier et le deuxième canal de réfrigérant (27, 28) partent d'une conduite de réfrigérant centrale (23) dans l'outil de perçage.

17. Outil de perçage selon la revendication 15 ou 16, **caractérisé en ce que** le premier canal de réfrigérant (27) et le deuxième canal de réfrigérant (28) débouchent dans des parois latérales différentes (11, 13) de l'espace de copeaux.

18. Outil de perçage selon l'une quelconque des revendications 15 à 17, **caractérisé en ce que** le premier canal de réfrigérant (27) débouche en tant que canal principal dans la paroi latérale (11) opposée à la nervure (19).

19. Outil de perçage selon la revendication 18, **caractérisé en ce que** le deuxième canal de réfrigérant (28) débouche en tant que canal auxiliaire dans la paroi latérale (13) portant l'élément de coupe (15).

20. Outil de perçage selon la revendication 19, **caractérisé en ce que** le deuxième canal de réfrigérant (28) s'étend sous l'élément de coupe (15).
